# EUROPÄISCHE PATENTANMELDUNG

(11) **EP 1 037 190 A2**
(43) Veröffentlichungstag der Anmeldung: **20.09.2000**
(21) Anmeldenummer: 00103753.0
(22) Anmeldetag: 23.02.2000
(51) Int. Cl.: G09B 9/00, A62C 39/00

(54) **Mobile Feuerlöschübungsanlage**

(30) Priorität: 16.03.1999 DE 29904800 U
(71) Anmelder: KRANTZ - TKT GmbH, 51465 Bergisch Gladbach (DE)
(72) Erfinder: Diederen, Klaus, 52499 Baesweiler (DE); Jansen, Franz, 52499 Baesweiler (DE)
(74) Vertreter: Bauer, Dirk, Dipl.-Ing. Dipl.-Kfm.

(57) **Zusammenfassung**

Eine mobile Feuerlöschübungsanlage (1) ist mittels eines Fahrzeugs über Straßen transportierbar und während des Betriebs von dem Fahrzeug abkoppelbar. Um eine derartige Feuerlöschübungsanlage auf einfache Weise mit Hilfe von bei der Feuerwehr vorhandenen Fahrzeugen transportieren und ohne zusätzliche Hebeeinrichtung absetzen und wieder aufnehmen zu können sowie die Anlage unmittelbar auf dem Untergrund aufstellen zu können, wird vorgeschlagen, daß ein Gehäuse der Feuerlöschübungsanlage (1) in Form mindestens eines Rollcontainers (20, 21) ausgebildet ist, der mit Hilfe der Ladeeinrichtung eines Wechselladerfahrzeugs (30) aufnehmbar und absetzbar sowie mit diesem transportierbar ist.

## Beschreibung

Die Erfindung betrifft eine mobile Feuerlöschübungsanlage, die mittels eines Fahrzeugs über Straßen transportierbar und während des Betriebs von dem Fahrzeug abkoppelbar ist.

Eine derartige Feuerlöschübungsanlage ist beispielsweise aus einem Prospekt der Firma Symtron Systems, Inc., Fair Lawn, NJ 07410 (US) bekannt. Die Feuerlöschübungsanlage ist dort auf einen Sattelauflieger aufgebaut, der sich mittels eines üblichen Lagertellers auf der Lagerpfanne eines Sattelzugfahrzeugs abstützt. Die gelenkige Verbindung zwischen Sattelauflieger und Sattelzugmaschine stellt auch bei großen Gesamtlängen des Zugs vertretbare Wendekreisdurchmesser sicher.

Während des Betriebs der bekannten Anlage kann der Sattelauflieger von der Zugmaschine getrennt werden. Im abgekoppelten Zustand stützt sich der Sattelauflieger hinten über die auch während des Fahrbetriebs wirksame Bereifung und an seiner Vorderseite über eine schwenkbare Stützradkonstruktion ab, die während des Fahrbetriebs hochgeklappt ist.

Derartige mobile Feuerlöschübungsanlagen werden in der Regel von größeren Feuerwehren angeschafft und zu Trainingszwecken benutzt. Dabei sollen diese Anlagen bestimmungsgemäß an verschiedenen Orten sowohl zur Demonstration als auch zu Übungszwecken, beispielsweise bei kleineren Feuerwehren oder auch Ausstellungen und Vorführungen, zum Einsatz kommen. Als nachteilig hat es sich dabei herausgestellt, daß die zum Transport derartiger Sattelauflieger benötigten Sattelzugmaschinen im Fahrzeugbestand der Feuerwehren in aller Regel nicht vorhanden sind. Aus diesem Grunde ist die bedarfsweise Beschaffung eines derartigen Fahrzeugs aufwendig und auch mit nicht unerheblichen Kosten verbunden. Die Anschaffung eines eigenen Sattelzugfahrzeugs verbietet sich aus Kostengründen ebenfalls in den allermeisten Fällen.

Des weiteren tritt bei der bekannten Anlage als nachteilig in Erscheinung, daß diese aufgrund der nicht entfernbaren Aufliegerbereifung stets eine große Höhe oberhalb des Untergrundes besitzt. Diese muß zu Übungszwecken durch entsprechende Zugänge oder durch eine versenkte Aufstellung überbrückt werden.

Die prinzipielle Möglichkeit, eine derartige mobile Feuerlöschübungsanlage zwar auf einem Sattelauflieger zu transportieren, während des Übungsbetriebs aber von dem Auflieger abzunehmen und unmittelbar auf dem Untergrund aufzustellen, ist in der Praxis kaum durchführbar, da das dazu erforderliche schwere Hebegerät, beispielsweise in der Form von Spezialkränen, einer Feuerwehr ebenfalls in aller Regel nicht zur Verfügung steht.

Der Erfindung liegt die Aufgabe zugrunde, eine mobile Feuerlöschübungsanlage vorzuschlagen, die sich auf einfache Weise mit Hilfe von bei der Feuerwehr vorhandenen Fahrzeugen transportieren und ohne zusätzliche Hebeeinrichtungen absetzen und wieder aufnehmen läßt, sowie unmittelbar auf dem Untergrund aufstellbar ist.

Ausgehend von einer Feuerlöschübungsanlage der eingangs beschriebenen Art wird diese Aufgabe erfindungsgemäß dadurch gelöst, daß ein Gehäuse der Feuerlöschübungsanlage in Form mindestens eines Rollcontainers ausgebildet ist, der mit Hilfe der Ladeeinrichtung eines Wechselladerfahrzeugs aufnehmbar und absetzbar sowie mit diesem transportierbar ist.

Der große Vorteil derartiger Rollcontainer besteht darin, daß zu deren Verladung keine zusätzliche Kraneinrichtung erforderlich ist, sondern daß die Verladung mit Hilfe der an einem Wechselladerfahrzeug zu diesem Zweck vorhandenen Ladeeinrichtung möglich ist. Derartige Wechselladerfahrzeuge sind bei jeder größeren Feuerwehr ohnehin vorhanden und dort zum Transport unterschiedlichster, ebenfalls in Form von Rollcontainern ausgebildeter Spezialausstattungmodule für besondere Einsatzzwecke vorgesehen.

Für den Transport und das Absenken und Aufnehmen der erfindungsgemäßen Feuerlöschübungsanlage kann die Feuerwehr somit auf ohnehin vorhandene Fahrzeugtypen zurückgreifen, so daß die Kosten sehr gering sind. Die Anschaffung eines speziellen Fahrzeugs, das nur für den Transport der Feuerlöschübungsanlage zum Einsatz käme, entfällt ebenso wie der alternative Transport derartiger Anlagen durch ein zu beauftragenden Transportunternehmen.

Außerdem ist der Raumbedarf für die Lagerung der Feuerlöschübungsanlage sehr gering, da deren Unterbringung völlig getrennt von dem Wechselladerfahrzeug erfolgen kann.

Des weiteren ist ein Vorteil der erfindungsgemäßen Anlage darin zu sehen, daß diese nach dem Absetzen direkt auf dem Untergrund aufsteht, so daß eine sehr gute Zugänglichkeit gegeben ist.

Gemäß einer besonders vorteilhaften Ausgestaltung der Erfindung wird vorgeschlagen, die Feuerlöschübungsanlage aus zwei Rollcontainern zusammenzusetzen, die im Betriebszustand jeweils mit den Stirnseiten aneinander anschließen, wobei die aneinander anschließenden Stirnseiten bei einem Transport auf dem Wechselladerfahrzeug jeweils dessen Heck bilden.

In Anbetracht der begrenzten Abmessungen eines Rollcontainers läßt sich auf diese Weise eine Verdoppelung des zur Verfügung stehenden Raumes erreichen, ohne daß beim Absetzen oder Aufnehmen der Container auf zusätzliche Ladegeräte zurückgegriffen werden müßte. Nach dem Absetzen des ersten Rollcontainers wird der zweite Rollcontainer von der beim Transport des ersten Rollcontainers das Heck bildenden Stirnseite her angesetzt. Dabei dürfte es in der Regel möglich sein, beide Container mit ein und demselben Fahrzeug zeitlich hintereinander zu transportieren, so daß die Notwendigkeit für ein zweites Wechselladerfahrzeug nicht besteht.

Eine vorteilhafte Weiterbildung der Feuerlöschübungsanlage besteht darin, daß die beiden Rollcontainer im Betriebszustand einen sich zumindest über Teilbereiche beider Rollcontainer erstreckenden Übungsraum bilden.

Die Bildung eines sich über beide Rollcontainer erstreckenden Übungsraums wird erleichtert, wenn zumindest Teilelemente der im Betriebszustand aneinander anschließenden Stirnseiten der Rollcontainer entfernbar sind. Dies kann zum Beispiel durch gänzlich entfernbare Elemente oder durch Türelemente erfolgen, die um 270° abklappbar sind.

Die Erfindung weiter ausgestaltend ist vorgesehen, daß mindestens ein Rollcontainer mit einem abgeschlossenen Kontrollraum und/oder mit einem abgeschlossenen Technikraum versehen ist.

Vorteilhafterweise sind der Kontrollraum und der Technikraum in gegenüberliegenden stirnseitigen Wandbereichen der im Betriebszustand befindlichen Feuerlöschübungsanlage angeordnet.

Schließlich ist noch vorgesehen, daß ein Rollcontainer mit einem von seiner Oberseite ausgehenden Treppenabgang in das Innere des Rollcontainers versehen ist, um auf diese Weise auch bei oberirdisch angeordneten Übungsanlagen einen Kellerbrand simulieren zu können.

Die Erfindung wird nachfolgend anhand eines Ausführungsbeispiels einer Feuerlöschübungsanlage, die in der Zeichnung schematisch dargestellt ist, näher erläutert. Es zeigt:
- Figur 1: eine perspektivische Darstellung einer Feuerlöschübungsanlage
- Figur 2: eine Seitenansicht zweier im Betriebszustand der Feuerlöschübungsanlage aneinandergefügten Rollcontainer
- Figur 3: einen Rollcontainer und ein davor angeordnetes Wechselladerfahrzeug
- Figur 4: das Wechselladerfahrzeug und den Rollcontainer während des Ladevorgangs
und
- Figur 5: einen auf dem Wechselladerfahrzeug in Transportposition befindlichen Rollcontainer.

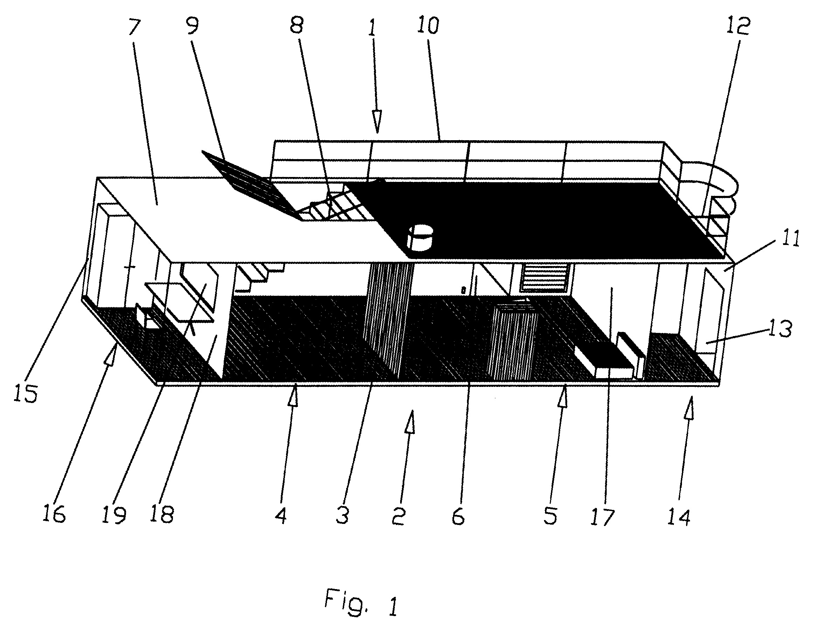

Figur 1 zeigt in schematischer Darstellung den prinzipiellen Aufbau einer mobilen Feuerlöschübungsanlage 1. Im Hinblick auf die den eigentlichen Feuerlöschübungen dienenden technischen Einrichtungen ist eine derartige Anlage allgemein bekannt, so daß in der nachfolgenden Beschreibung Erläuterungen diesbezüglich entbehrlich sind.

Die Feuerlöschübungsanlage 1 besteht aus zwei Gehäusehälften in Form von Rollcontainern, deren Trennfuge aus Übersichtlichkeitsgründen in Figur 1 nicht dargestellt ist. Die Trennfuge unterteilt die Feuerlöschübungsanlage 1 der Länge nach in zwei von ihrer Grundform quaderförmige Rollcontainer, die jeweils mit Hilfe eines Wechselladerfahrzeugs transportierbar sind.

Die Feuerlöschübungsanlage 1 umfaßt einen im mittleren Bereich angeordneten und sich über beide Rollcontainer erstreckenden Brandraum 2, der durch eine Trennwand 3 in zwei Teilräume 4 und 5 unterteilt ist. Der Brandraum 2 ist seitlich durch eine Tür 6 und von der Oberseite 7 der Feuerlöschübungsanlage 1 durch einen Treppenabgang 8 zugänglich, der durch eine Klappe 9 verschließbar ist. Aus Sicherheitsgründen ist die Oberseite 7 der Feuerlöschübungsanlage 1 mit einem Geländer 10 versehen, das sich beidseitig in einem Bereich zwischen dem Treppenabgang 8 und einem an einer Stirnseite 11 angeordneten, nicht näher dargestellten Leiteraufgang 12 befindet.

Angrenzend an die Stirnseite 11 und durch eine darin angeordnete Tür 13 zugänglich, befindet sich ein Technikraum 14, der die zur Erzeugung der Brandstelle erforderlichen Einrichtungen enthält.

Ausgehend von der gegenüberliegenden Stirnseite 15 befindet sich ein Kontrollraum 16, der durch eine in der Längsseite der Feuerlöschübungsanlage 1 befindliche und nicht abgebildete Tür von außen zugänglich ist. Während die den Technikraum 14 vom Brandraum 2 abtrennende Wand 17 geschlossen ausgebildet ist, weist die den Technikraum 16 von dem Brandraum 2 abteilende Wand 18 ein großes Sichtfenster 19 auf, das dem Übungsleiter einen Sichtkontakt in den Brandraum 2 ermöglicht.

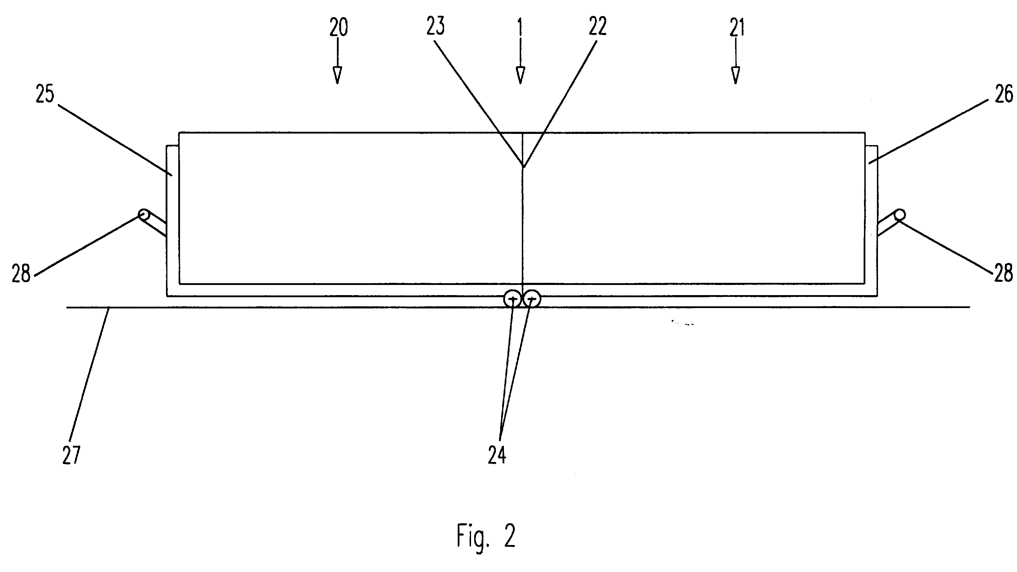

Der Figur 2 läßt sich entnehmen, wie die Feuerlöschübungsanlage 1 aus zwei Rollcontainern 20 und 21 zusammengesetzt ist. Jeder der Rollcontainer 20, 21 ist in der Nähe der dem jeweils anderen Rollcontainer 20, 21 zugewandten Stirnseite 22, 23 an jeweils beiden Längsseiten mit einer drehbar gelagerten Rolle 24 versehen. Beide Rollcontainer 20, 21 stützen sich auf der den Rollen 24 gegenüberliegenden Stirnseite 25, 26 über nicht dargestellte Stützelemente auf dem Untergrund 27 ab.

Die beiden Rollcontainer 20, 21 sind im Bereich ihrer in Betriebsstellung der Feuerlöschübungsanlage 1 aneinandergrenzenden Stirnseiten 22 und 23 mit nicht dargestellten Verbindungselementen zur sicheren Fixierung gegeneinander versehen.

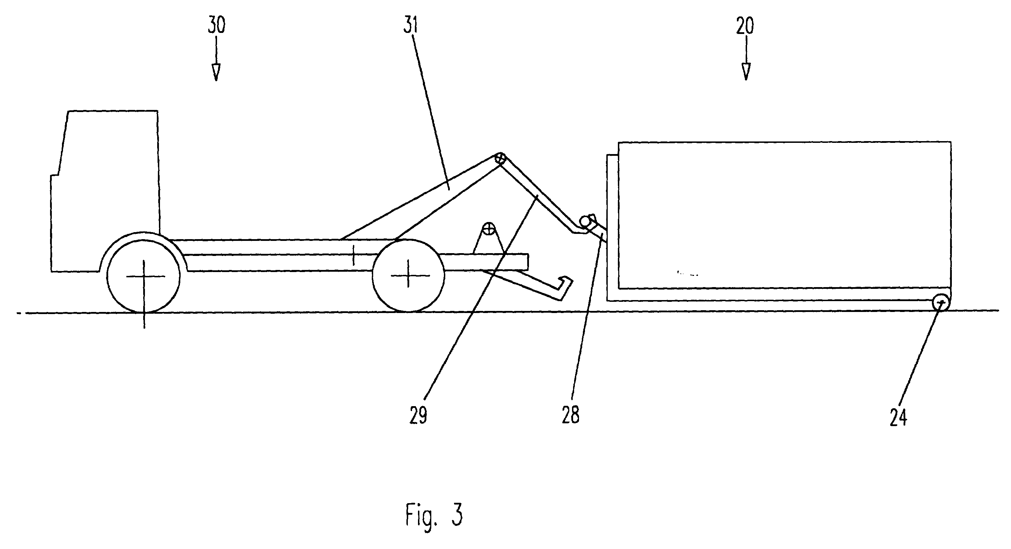

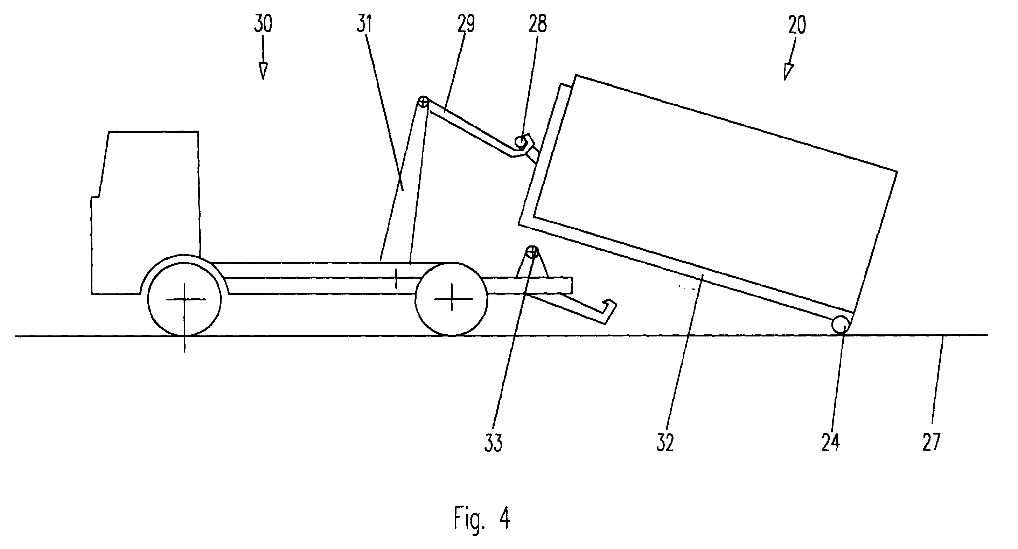

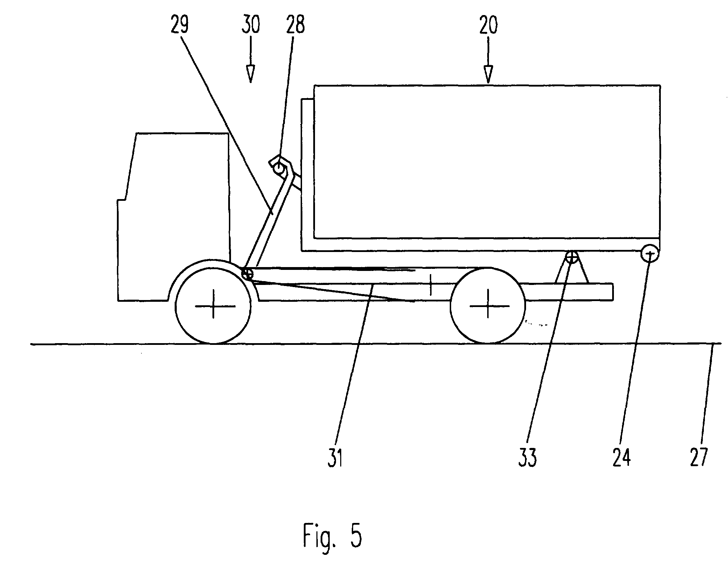

An den Stirnseiten 25, 26 sind die Rollcontainer 20, 21 jeweils mit einer fest verbundenen, starren Aufnahmeöse 28 versehen. Wie sich der Figur 3 entnehmen läßt, dient diese Aufnahmeöse 28 zur Kopplung mit einem Hakenteil 29 eines Wechselladerfahrzeugs 30. Das Hakenteil 29 ist gelenkig mit einem Schwenkarm 31 verbunden, der von der in Figur 3 gezeigten Absetzstellung über eine in Figur 4 gezeigte Zwischenstellung in die in Figur 5 eingenommene Transportstellung schwenkbar ist.

Während sich der Rollcontainer 20 während der ersten Phasen des Aufladevorgangs einerseits auf den Rollen 24 und andererseits mit der Aufnahmeöse 28 auf dem Hakenteil 29 abstützt, kommt die Unterseite 32 des Rollcontainers 20 ab einer gewissen Stellung des Schwenkarms 31 mit zwei am Heck des Wechselladerfahrzeugs 30 angeordneten Stützrollen 33 in Kontakt. Ab diesem Zeitpunkt verlieren die Rollen 24 den Kontakt zum Untergrund 27.

In dem in Figur 5 gezeigten Transportzustand des Rollcontainers 20 stützt sich dieser sowohl auf den Stützrollen 33 als auch auf einer im Mittelbereich des Wechselladerfahrzeugs 30 befindlichen, aus Gründen der Übersichtlichkeit jedoch nicht dargestellten, Stützeinrichtung ab.

Der Absetzvorgang der Rollcontainer 20, 21 erfolgt in umgekehrter Reihenfolge. Nach dem Absetzen eines ersten Rollcontainers 20 wird der zweite Rollcontainer 21 von der mit den Rollen 24 versehene Stirnseite des ersten Rollcontainers 20 her an diesen angesetzt und beide Rollcontainer 20, 21 anschließend miteinander verbunden.

Zur Realisierung von Feuerlöschübungsanlagen, die aus mehr als zwei Rollcontainern zusammengesetzt sind, ist es prinzipiell möglich und liegt ebenfalls im Rahmen dieser Erfindung, mehrere Rollcontainer mit ihren Längsseiten aneinandergrenzend anzuordnen. In diesen Längsseiten können ebenfalls herausnehmbare Elemente vorhanden sein, um Verbindungen zwischen aneinandergrenzenden Brandräumen zu schaffen.

## Patentansprüche

1. Mobile Feuerlöschübungsanlage (1), die mittels eines Fahrzeugs über Straßen transportierbar und während des Betriebs von dem Fahrzeug abkoppelbar ist, dadurch gekennzeichnet, daß ein Gehäuse der Feuerlöschübungsanlage (1) in Form mindestens eines Rollcontainers (20, 21) ausgebildet ist, der mit Hilfe der Ladeeinrichtung eines Wechselladerfahrzeugs (30) aufnehmbar und absetzbar sowie mit diesem transportierbar ist.

2. Feuerlöschübungsanlage nach Anspruch 1, dadurch gekennzeichnet, daß sie aus zwei Rollcontainern (20, 21) zusammengesetzt ist, die im Betriebszustand mit Stirnseiten (22, 23) aneinander anschließen, wobei die aneinander anschließenden Stirnseiten (22, 23) bei einem Transport auf dem Wechselladerfahrzeug (30) jeweils dessen Heck bilden.

3. Feuerlöschübungsanlage nach Anspruch 2, dadurch gekennzeichnet, daß die beiden Rollcontainer (20, 21) im Betriebszustand einen sich zumindest über Teilbereiche beider Rollcontainer (20, 21) erstreckenden Übungsraum (2) bilden.

4. Feuerlöschübungsanlage nach Anspruch 2 oder 3, dadurch gekennzeichnet, daß zumindest Teilelemente der im Betriebszustand aneinander anschließenden Stirnseiten (22, 23) der Rollcontainer (20, 21) entfernbar sind.

5. Feuerlöschübungsanlage nach einem der Ansprüche 1 bis 4, dadurch gekennzeichnet, daß mindestens ein Rollcontainer (20, 21) mit einem abgeschlossenen Kontrollraum (16) und einem abgeschlossenen Technikraum (14) versehen ist.

6. Feuerlöschübungsanlage nach Anspruch 5 und einem der Ansprüche 2 bis 4, dadurch gekennzeichnet, daß der Kontrollraum (16) und der Technikraum (14) in gegenüberliegenden stirnseitigen Randbereichen der im Betriebszustand befindlichen Feuerlöschübungsanlage (1) angeordnet sind.

7. Feuerlöschübungsanlage nach einem der Ansprüche 1 bis 6, dadurch gekennzeichnet, daß ein Rollcontainer (20, 21) mit einem von seiner Oberseite (7) ausgehenden Treppenabgang (8) in das Innere des Rollcontainers (20, 21) versehen ist.
